# EUROPÄISCHE PATENTSCHRIFT

(11) **EP 0 980 897 B1**
(45) Veröffentlichungstag und Bekanntmachung des Hinweises auf die Patenterteilung: **10.07.2002**
(21) Anmeldenummer: 99115744.7
(22) Anmeldetag: 10.08.1999
(51) Int. Cl.: C09B 67/08, C09D 11/02, C09B 67/20

(54) **Pigmentpräparation für den Offsetdruck mit verbesserten rheologischen Eigenschaften**
Pigment preparation for offset printing with improved rheological properties
Préparation pigmentaire pour l'impression offset ayant des propriétés rhéologiques améliorées

(30) Priorität: 18.08.1998 DE 19837302
(43) Veröffentlichungstag der Anmeldung: 23.02.2000
(73) Patentinhaber: Clariant GmbH, 65929 Frankfurt am Main (DE)
(72) Erfinder: Metz, Hans Joachim, Dr., 64285 Darmstadt (DE); Weide, Joachim, 65779 Kelkheim (DE); Wallach, Thomas, Dr., 65597 Hünfelden (DE)

(56) Entgegenhaltungen:
- EP-A- 0 548 506
- EP-A- 0 725 096
- EP-A- 0 733 685
- EP-A- 0 768 349
- EP-A- 0 769 538
- EP-A- 0 773 233
- EP-A- 0 816 389
- EP-A- 0 816 392
- DE-A- 2 150 216
- DE-A- 4 114 863

## Beschreibung

Die Erfindung betrifft Pigmentpräparationen, die mit einer neuartigen Harzbasis belegt sind und bei der Verwendung als Druckfarben für den Offsetdruck verbesserte rheologische Eigenschaften aufzeigen.

Es ist bekannt, daß geharzte Pigmente eine erhöhte Farbstärke, Glanz, Transparenz und gute Dispergierbarkeit im Anwendungsmedium für Offsetdruckfarben besitzen.

Einfache Naturharze auf der Basis des Kolophoniums haben sich besonders zur Pigmentpräparierung bewährt. Kolophonium besteht aus einem Gemisch verschiedener Harzsäuren, vorwiegend Abietinsäure, Pimarsäure und deren Derivate. Harze auf der Basis des Kolophoniums werden oftmals wegen ihrer Oxidationsempfindlichkeit chemisch verändert, z. B durch Disproportionierung oder Hydrierung. Die genannten chemischen Abkömmlinge der natürlichen Harzsäuren besitzen eine mittlere Molmasse von etwa 300 g mol⁻¹. Man spricht deshalb bei diesen Harztypen von niedermolekularen Harzen. Die mit diesen Kolophoniumderivaten präparierten Pigmente neigen jedoch bei Verwendung in modernen Offset-Druckfarben zum Nebeln. Nebeln bedeutet, daß die Druckfarbe in den Walzenspalten von modernen, schnellaufenden Offsetrotationsmaschinen, besonders zwischen Farbauftragswalzen und Druckplattenzylinder, zur Aerosolbildung neigt. Das Aerosol entsteht durch den Bruch von Druckfarbenfäden, die bei der Teilung der Druckfarbe auf der Ausgangsseite der Walzenspalten gebildet werden. Der feine Farbnebel führt zur Verschmutzung der Druckmaschinen und zur Belastung der Raumluft.

Es bestand daher die Aufgabe, Druckfarbenpigmente so zu präparieren, daß sie ihre Neigung zum Nebeln verlieren, aber ihren hohen anwendungstechnischen Anforderungen in Offsetdruckfarben, wie geeignete Rheologie und hohe Farbstärke, gerecht werden.

Es wurde gefunden, daß Pigmente, die mit bestimmten resolmodifizierten Harzsäurederivaten mit einer mittleren Molmasse von 400 bis 10.000 g/mol präpariert sind, überraschenderweise diese Aufgabe lösen.

Gegenstand der Erfindung sind daher Pigmentpräparationen, enthaltend ein organisches Pigment sowie ein phenolmodifiziertes Naturharzderivat mit einem gewichtsmittleren Molekulargewicht (M_{w}) von 400 bis 10.000 g/mol, das erhältlich ist durch Umsetzen einer Mischung von Reaktanden, enthaltend
a) 50 bis 95 Gew.-% Naturharz oder Naturharzsäuren
b) 0,5 bis 30 Gew.-% einkernige oder mehrkernige Phenole
c) 0,01 bis 15 Gew.-% Aldehyde oder Aldehydacetale
d) 0,001 bis 2 Gew.-% Metallverbindungen aus den Gruppen la und lla des Periodensystems, und
e) 4,489 bis 30 Gew.-% α,β-ethylenisch ungesättigte Carbonsäuren oder deren Anhydride,
und eine Säurezahl im Bereich von 160 bis 300 mg KOH pro g Harz, bevorzugt 200 bis 260 mg KOH pro g Harz, aufweist.

Die für die Komponente a) bis e) genannten Anteile beziehen sich immer auf die Summe aller Komponenten, die stets 100 Gew.-% beträgt. Durch Variation der Komponentenanteile lassen sich die Löslichkeit in verdünnter Natronlauge, das Molekulargewicht und die Pigmentbenetzungsfähigkeit auf die gewünschten Werte abstimmen. Bevorzugt sind solche phenolmodifizierten Naturharzderivate, die in mindestens 10 gew.-%iger Natronlauge klar löslich sind.

Geeignete Naturharze oder Naturharzsäuren a) sind beispielsweise Kolophonium (Baumharz), Tallharz, Wurzelharz oder teilweise hydrierte, disproportionierte sowie dimerisierte Naturharze.

Die Phenolkomponente b) besteht aus einkernigen oder mehrkernigen Phenolen. Es können beispielsweise Phenol, verschiedene Kresole, Butylphenol, Amylphenol, Nonylphenol, Octylphenol, Phenylphenol und Bisphenol A verwendet werden, die gegenüber Oxoverbindungen di- und höherfunktionell sind, besonders bevorzugt Mischungen aus Nonylphenol und Bisphenol A. Der bevorzugte Anteil der Komponenten b) beträgt in den Naturharzderivaten 1 bis 25 Gew.-%, insbesondere 1,5 bis 10 Gew.-%.

Als Aldehyd- oder Aldehydacetalkomponente c) werden vorzugsweise die Aldehyde und Aldehydacetale eingesetzt, die üblicherweise zur Resol- bzw. Novolakherstellung verwendet werden. Insbesondere wird Formaldehyd in wäßriger Lösung oder in oligomerer oder polymerer Form verwendet, besonders bevorzugt ist Paraformaldehyd. Die Komponente c) ist in Naturharzderivaten vorzugsweise in einem Anteil von 0,02 bis 10 Gew.-%, insbesondere 0,05 bis 7 Gew.-% enthalten.

Geeignete Metallverbindungen d) aus den Gruppen la und Ila des Periodensystems sind beispielsweise Metalloxide und -hydroxide oder Carbonsäuresalze dieser Metalle. Besonders bevorzugt werden Natriumsalze oder deren wäßrige Lösungen, insbesondere Natriumhydroxid. Die Metallverbindung d) liegt in einem Anteil von vorzugsweise 0,002 bis 1,8 Gew.-%, insbesondere 0,005 bis 1 Gew.-%, vor.

Als α,β-ethylenisch ungesättigte Carbonsäuren oder deren Anhydride e) können vorzugsweise aliphatische oder aromatisch/aliphatische Carbonsäuren mit 3 bis 22 Kohlenstoffatomen, insbesondere Methacrylsäure, Fumarsäure, Maleinsäure, Maleinsäureanhydrid, Itaconsäure oder Zimtsäure eingesetzt werden, besonders bevorzugt wird Acrylsäure. Die Komponente e) liegt vorzugsweise in einem Anteil von 5 bis 20 Gew.-% vor.

Die Herstellung der phenolmodifizierten Naturharzderivate erfolgt durch die Umsetzung der Komponenten a) bis e) in Lösung oder vorzugsweise in Substanz bei Temperaturen im Bereich von 100 °C bis 300 °C, vorzugsweise 110 °C bis 280 °C, insbesondere 140 °C bis 260 °C. Dazu wird entweder die gesamte Mischung aus allen eingesetzten Komponenten zur Reaktion gebracht oder einzelne Komponenten werden vorgelegt und die übrigen durch Zudosieren zur Reaktion gebracht. Die Reaktion wird so durchgeführt, daß Naturharze oder Naturharzsäuren aus der Substanzgruppe a) mit α,β-ethylenisch ungesättigten Carbonsäuren oder deren Anhydriden aus der Substanzgruppe e) im Temperaturbereich von vorzugsweise 140 bis 240 °C zur Reaktion gebracht werden, mit phenolischen Komponenten aus der Substanzgruppe b), Aldehydkomponenten aus der Substanzgruppe c) und einer Metallverbindung aus der Substanzgruppe d) vermischt und bei einer Temperatur von 100 bis 260 °C, vorzugsweise 110 bis 160 °C, umgesetzt werden, vorzugsweise unter einem Druck zwischen 1 und 10 bar, insbesondere 1 bis 5 bar.

Anstelle von Phenol und Aldehyd oder auch anteilig mit diesen kann ein separat nach bekannten Methoden aus Phenolen und Aldehyden in Gegenwart basischer Katalysatoren bei einer Temperatur von 50 bis 160 °C, vorzugsweise 60 bis 100 °C, bei Normaldruck oder erhöhtem Druck hergestelltes Phenol-Formaldehyd-Kondensationsprodukt verwendet werden. Wird ein separat hergestelltes Phenol-Formaldehyd-Kondensationsprodukt verwendet, so kann unter Normaldruck gearbeitet werden. In Abweichung zum vorstehenden Verfahren läßt sich das Kondensationsprodukt der Phenolkomponenten b) und Aldehydkomponenten c) auch vorteilhaft in situ in der Harzschmelze herstellen. Bei dieser Reaktionsführung, die energetisch günstiger ist und bei der ein höherer Aldehyd-Umsatz erzielt wird, werden zunächst die Naturharzsäuren aus der Substanzgruppe a), phenolische Komponenten aus der Substanzgruppe b), Aldehydkomponenten aus der Substanzgruppe c) und Metallverbindungen aus der Substanzgruppe d) bei einer Temperatur von 100 bis 260 °C, vorzugsweise 110 bis 160 °C, bei einem Druck von 1 bis 10 bar, vorzugsweise 1,5 bar bis 5 bar, miteinander umgesetzt. Das erhaltene Gemisch wird dann mit α,β-ethylenisch ungesättigten Carbonsäuren oder deren Anhydriden aus der Substanzgruppe e) im Temperaturbereich zwischen 100 bis 260°C, vorzugsweise 160 °C bis 240 °C zur Reaktion gebracht.

Bei dem erfindungsgemäßen Syntheseverfahren wird der Fortgang der Reaktion zweckmäßigerweise anhand der Säurezahl und des Schmelzpunkts des Reaktionsgemisches verfolgt. Wird die Säurezahl von 160 - 300 mg KOH pro g Harz, vorzugsweise 200 - 260 mg KOH pro g Harz erreicht, wird die Reaktion durch Abkühlen der Schmelze auf Raumtemperatur gestoppt. Flüchtige Komponenten können dabei durch Anlegen von Vakuum vor oder auch während des Abkühlens aus der Reaktionsmischung entfernt werden.

Das Molekulargewicht der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Das mittlere Molekulargewicht (Gewichtsmittel M_{w}) der erfindungsgemäßen Harze liegt im Bereich von 400 bis 10.000 g/mol, vorzugsweise 1.000 bis 8.000 g/mol, insbesondere 1.200 bis 5.000 g/mol.

Vorzugsweise sind die erfindungsgemäß eingesetzten Harze in 2,5 gew.-%iger Natronlauge im Bereich von 1 bis 45 Gew.-%, vorzugsweise 2 bis 30 Gew.-%, besonders bevorzugt 5 bis 20 Gew.-%, klar löslich. Zur Ermittlung der Löslichkeit in 2,5 gew.-%iger Natronlauge werden die erfindungsgemäßen Harze pulverisiert, bei 70 °C in der verdünnten Natronlauge unter Rühren gelöst und die Lösung auf 23 °C abgekühlt.

Als Pigmente der erfindungsgemäßen Pigmentpräparation kommen alle für Offsetdruckfarben geeigneten organischen Pigmente in Betracht, insbesondere Diarylgelbpigmente.

Beispiele für geeignete Druckfarbenpigmente sind C.I. Pigment Yellow 12, 13, 14, 17, 55, 74, 83, 126, 127, 174, 176, 188, C.I. Pigment Orange 16, 34, C.I. Pigment Red 57:1 und 63:1, sowie Mischungen dieser Pigmente.

Bevorzugt im Sinne der vorliegenden Erfindung sind Pigmentpräparationen, enthaltend 50 bis 90, vorzugsweise 60 bis 90, insbesondere 65 bis 75 Gew.-% an organischem Pigment, 10 bis 50, vorzugsweise 10 bis 40, insbesondere 25 bis 35, Gew.-% an phenolmodifiziertem Naturharzderivat, und 0 bis 5 Gew.-% an üblichen Zusatzstoffen und Hilfsmitteln. Übliche Zusatzstoffe und Hilfsmittel sind beispielsweise kationische, anionische oder nichtionische Tenside.

Gegenstand der Erfindung ist auch ein Verfahren zur Herstellung einer Pigmentpräparation, dadurch gekennzeichnet, daß man das phenolmodifizierte Naturharzderivat während der Herstellung des organischen Pigments; oder dem feinteiligen Pulver, einem Preßkuchen oder einer wäßrigen oder organischen Suspension des fertigen organischen Pigments zugibt.

Besonders vorteilhaft ist die direkte Präparierung der bei der Pigmentherstellung - z. B. bei Azopigmenten nach der Kupplung oder Verlackung - anfallenden Pigmentsuspensionen mit dem phenolmodifizierten Naturharzderivat. Die Präparierung mit dem erfindungsgemäßen phenolmodifizierten Harz kann auch nachträglich an in Wasser resuspendierten feinteiligen Pulverpigmenten und Pigmentpreßkuchen durchgeführt werden.

Die erfindungsgemäßen Pigmentpräparationen lassen sich in für Offsetdruckfarben üblichen Firnissen leicht dispergieren und ergeben Druckfarben mit hohen Farbstärken, hohem Glanz, einer guten Transparenz und einem verbesserten Wegschlagverhalten. Eine Nebelbildung findet nicht mehr statt oder ist sehr gering. Trotz höherer Viskosität als üblich besitzen die aus den erfindungsgemäßen Pigmentpräparationen hergestellten Offsetdruckfarben gute rheologische Eigenschaften, wie z. B. Fließfähigkeit. Selbst bei hohen Harzgehalten der Pigmentpräparationen, z. B. 30 - 40 Gew.-% Harz, resultieren bei ihrer Verarbeitung zu Druckfarben Farbstärken, die mit denen üblicher geharzter Pigmente vergleichbar sind oder höher liegen.

Gegenstand der vorliegenden Erfindung sind auch Offsetdruckfarben, bestehend im wesentlichen aus der erfindungsgemäßen Pigmentpräparation und einem üblichen Offsetdruckfarbenfirnis, wie z. B. für Bogenoffset, Rollenoffset und Zeitungsdruck.

### Herstellungsbeispiele für phenolmodifizierte Naturharzderivate

### Herstellungsbeispiel 1

In einem heizbaren 2 ltr. Mehrhalskolben mit Rührwerk, Thermometer, Tropftrichter und Rückflußkühler wurden unter einer Stickstoffatmosphäre 600 g handelsübliches Kolophonium geschmolzen und zur 190 °C heißen Schmelze Acrylsäure hinzudosiert. Die Acrylsäure wurde mit solcher Geschwindigkeit dosiert, daß ein Rückfluß am Rückflußkühler entstand. Zwei Stunden nach Beendigung der Acrylsäuredosierung wird das Reaktionsgemisch auf 140 °C abgekühlt und 10 Gew.-% einer 85 gew.-%igen xylolischen Lösung eines nach bekannten Methoden hergestellten Resoles hinzugegeben (Resolzusammensetzung: 71 Gew.-% Nonylphenol, 4,8 Gew.-% Bisphenol A, 23,9 Gew.-% Formaldehyd, 0,3 Gew.-% Natriumhydroxid). Die Reaktionsmischung wird über 1 Stunde auf 200 °C erhitzt und anschließend zur Entfernung der flüchtigen Bestandteile ein Vakuum von 100 mbar über 0,25 Stunden angelegt. Nach Beendigung der Vakuumdestillation wird das Reaktionsgemisch auf Raumtemperatur abgekühlt. Das Harz weist einen Schmelzpunkt von 100 °C, eine Säurezahl von 230 mg KOH pro g Harz, ein gewichtsgemitteltes Molukargewicht von 5.000 g/mol und ein Löslichkeit in einer 2,5 %igen Natronlauge von 25 Gew.-% auf.

### Herstellungsbeispiel 2

In einem heizbaren 2 ltr. Autoklaven mit Rührwerk werden unter einer Stickstoffatmosphäre 600 g Kolophonium geschmolzen. Dazu gibt man 36 g Nonylphenol, 21 g Bisphenol A, 0,25 G Natriumhydroxid und bei 110 °C 12 g Paraformaldehyd. Dann wird der Autoklav druckdicht verschlossen und auf eine Temperatur von 140 °C gebracht. Bei dieser Temperatur werden 10 g Maleinsäureanhydrid hinzugegeben und 0,25 Stunden bei dieser Temperatur gehalten. Anschließend wird die Reaktionsmischung auf 195 °C erhitzt und 48 g Acrylsäure über einen Zeitraum von 1 Stunde mittels Pumpe hinzudosiert. Nach Beendigung der Dosierung wird die Schmelze über 1,5 h bei 200 °C gerührt, schließlich aus dem Autoklaven ausgetragen und auf Raumtemperatur abgekühlt. Das Harz weist einen Schmelzpunkt von 105 °C, eine Säurezahl von 240 mg KOH pro g Harz, ein gewichtsgemitteltes Molukargewicht von 2.000 g/mol und eine Löslichkeit in einer 2,5 %igen Natronlauge von 15 Gew.-% auf.

### Beispiele für Pigmentpräparationen

### Beispiel 1

138 Teile C.I. Pigment Yellow 176 werden in ca. 2.000 Teilen Wasser suspendiert und mit Natronlauge auf einen pH-Wert von 11 eingestellt. Zu dieser Suspension werden 80 Teile des Harzes aus Herstellungsbeispiel 2, das in 700 Teilen Wasser und 41 Volumenteilen Natronlauge 33 gew.-%ig gelöst wurde, zugegeben. Die Pigmentpräparation wird anschließend auf 98 °C erhitzt und eine Stunde bei dieser Temperatur nachgerührt. nach dem Abkühlen auf 65 °C wird das Harz durch Zugabe von ca. 80 Volumenteilen Salzsäure 31 %ig bis zu einem pH-Wert von 4 ausgefällt. Die Pigmentpräparation wird filtriert, neutral gewaschen und im Trockenschrank bei 60 °C getrocknet. Nach Mahlung erhält man 216 Teile eines gelben Pulvers.

### Beispiel 2

131 Teile C.I. Pigment Yellow 12 werden in ca. 1.000 Teilen Wasser suspendiert und mit Natronlauge auf einen pH-Wert von 7 bis 7,5 eingestellt. Zu dieser Suspension werden 67 Teile des Harzes aus Herstellungsbeispiel 2, das in 700 ml Wasser und 35 Volumenteilen Natronlauge 33 gew.-%ig gelöst wurde, zugegeben. Die Pigmentpräparation wird anschließend auf 90 °C erhitzt und eine halbe Stunde bei dieser Temperatur nachgerührt. Nach dem Abkühlen auf 65 °C wird das Harz durch Zugabe von ca. 68 Volumenteilen Salzsäure 31 gew.-%ig bis zu einem pH-Wert von 4 ausgefällt. Die Pigmentpräparation wird filtriert, neutral gewaschen und im Trockenschrank bei 60 °C getrocknet. Nach Mahlung erhält man 196 Teile eines gelben Pulvers.

### Beispiel 3

137 Teile C.I. Pigment Yellow 127 werden in ca. 1.000 Teilen Wasser suspendiert und mit Natronlauge auf einen pH-Wert von 11 eingestellt. Zu dieser Suspension werden 34 Teile des Harzes aus Herstellungsbeispiel 1, das in 400 ml Wasser und 18 Volumenteilen Natronlauge 33 gew.-%ig gelöst wurde, zugegeben. Die Pigmentpräparation wird anschließend auf 90 °C erhitzt und eine halbe Stunde bei dieser Temperatur nachgerührt. Nach dem Abkühlen auf 65 °C wird das Harz durch Zugabe von ca. 35 Volumenteilen Salzsäure 31 gew.-%ig bis zu einem pH-Wert von 4 ausgefällt. Die Pigmentpräparation wird filtriert, neutral gewaschen und im Trockenschrank bei 60 °C ausgetrocknet. Nach Mahlung erhält man 169 Teile eines gelben Pulvers.

### Beispiel 4

134 Teile C.I. Pigment Yellow 174 werden in ca. 1.000 Teilen Wasser suspendiert und mit Natronlauge auf einen pH-Wert von 7 bis 7,5 eingestellt. Zu dieser Suspension werden 66 Teile des Harzes aus Herstellungsbeispiel 2, das in 700 ml Wasser und 34 Volumenteilen Natronlauge 33 gew.-%ig gelöst wurde, zugegeben. Die Pigmentpräparation wird anschließend auf 98 °C erhitzt und eine halbe Stunde bei dieser Temperatur nachgerührt. Nach dem Abkühlen auf 65 °C wird das Harz durch Zugabe von ca. 68 Volumenteilen Salzsäure 31 gew.-%ig bis zu einem pH-Wert von 4 ausgefällt. Die Pigmentpräparation wird filtriert, neutral gewaschen und im Trockenschrank bei 60 °C getrocknet. Nach Mahlung erhält man 198 Teile eines gelben Pulvers.

### Beispiel 5

88 Teile C.I. Pigment Red 57:1 und 0,9 Teile C.I. Pigment Red 63:1 nach herkömmlicher Kupplung und Verlackung in ca. 1.500 Teilen Wasser suspendiert, werden mit Natronlauge auf einen pH-Wert von 12,5 eingestellt. Zu dieser Suspension werden 20 Teile Harz aus Herstellungsbeispiel 1, das in 130 Teilen Wasser und 8 Volumenteilen Natronlauge 33 gew.-%ig gelöst wurde, zugegeben. Die Pigmentpräparation wird anschließend bei 25 °C zwei Stunden nachgerührt. Danach wird das Harz durch Zugabe von ca. 30 Volumenteilen Essigsäure 60 gew.-%ig bis zu einem pH-Wert von 5 ausgefällt. Die Pigmentpräparation wird filtriert, neutral gewaschen und im Trockenschrank bei 80 °C getrocknet. Nach Mahlung erhält man 108 Teile eines roten Pulvers.

Eine Offsetdruckfarbe mit einer nach einem der Beispiele 1 bis 5 hergestellten Pigmentpräparation zeigt ein verbessertes Nebelverhalten bei schnellaufenden Offsetrotationsmaschinen im Vergleich zu Druckfarben basierend auf Pigmentpräparationen, die mit klassischen Naturharzen oberflächenbelegt sind. Gegenüber Offsetdruckfarben auf Basis kolophoniumpräparierter Pigmente zeigen die erfindungsgemäß erhaltenene Offsetdruckfarben in üblichen Firnissen ein gutes Fließverhalten trotz höherer Viskosität.

## Patentansprüche

1. Pigmentpräparation, enthaltend ein organisches Pigment sowie ein phenolmodifiziertes Naturharzderivat mit einem gewichtsmittleren Molekulargewicht (M_{w}) von 400 bis 10.000 g/mol, das erhältlich ist durch Umsetzen einer Mischung von Reaktanden, enthaltend
a) 50 bis 95 Gew.-% Naturharz oder Naturharzsäuren
b) 0,5 bis 30 Gew.-% einkernige oder mehrkernige Phenole
c) 0,01 bis 15 Gew.-% Aldehyde oder Aldehydacetale
d) 0,001 bis 2 Gew.-% Metallverbindungen aus den Gruppen Ia und IIa des Periodensystems, und
e) 4,489 bis 30 Gew.-% α,β-ethylenisch ungesättigte Carbonsäuren oder deren Anhydride,
und eine Säurezahl im Bereich von 160 bis 300 mg KOH pro g Harz, aufweist.

2. Pigmentpräparation nach Anspruch 1, **dadurch gekennzeichnet, daß** das phenolmodifizierte Naturharzderivat eine Säurezahl zwischen 200 und 260 mg KOH pro g Harz aufweist.

3. Pigmentpräparation nach Anspruch 1 oder 2, **dadurch gekennzeichnet, daß** die mittlere Molmasse M_{w} des phenolmodifizierten Naturharzderivats 1.000 bis 8.000 g/mol ist.

4. Pigmentpräparation nach mindestens einem der Ansprüche 1 bis 3, **dadurch gekennzeichnet, daß** die Komponente a) Kolophonium, Tallharz, Wurzelharz oder teilweise hydrierte, disproportionierte oder dimerisierte Naturharze sind.

5. Pigmentpräparation nach mindestens einem der Ansprüche 1 bis 4, **dadurch gekennzeichnet, daß** die Komponente b) Phenol, Kresol, Butylphenol, Amylphenol, Nonylphenol, Octylphenol, Phenylphenol oder Bisphenol A ist.

6. Pigmentpräparation nach mindestens einem der Ansprüche 1 bis 5, **dadurch gekennzeichnet, daß** die Komponente e) Methacrylsäure, Acrylsäure, Fumarsäure, Maleinsäure, Maleinsäureanhydrid, Itaconsäure, Zimtsäure oder eine Mischung davon ist.

7. Pigmentpräparation nach mindestens einem der Ansprüche 1 bis 6, **dadurch gekennzeichnet, daß** das organische Pigment C.I. Pigment Yellow 12, 13, 14, 17, 55, 74, 83, 126, 127, 174, 176, 188, C.I. Pigment Orange 16, 34, C.I. Pigment Red 57:1 und 63:1, sowie eine Mischung dieser Pigmente ist.

8. Pigmentpräparation nach mindestens einem der Ansprüche 1 bis 7, enthaltend 50 bis 90, vorzugsweise 65 bis 75, Gew.-% an organischem Pigment, 10 bis 50, vorzugsweise 25 bis 35, Gew.-% an phenolmodifiziertem Naturharzderivat, und 0 bis 5 Gew.-% an üblichen Zusatzstoffen und Hilfsmitteln.

9. Verfahren zur Herstellung einer Pigmentpräparation nach einem oder mehreren der Ansprüche 1 bis 8, **dadurch gekennzeichnet, daß** man das phenolmodifizierte Naturharzderivat während der Herstellung des organischen Pigments, oder dem feinteiligen Pulver, einem Preßkuchen oder einer wäßrigen oder organischen Suspension des organischen Pigments zugibt.

10. Verwendung einer Pigmentpräparation nach einem oder mehreren der Ansprüche 1 bis 8 als Offsetdruckfarbe.

11. Offsetdruckfarbe, bestehend im wesentlichen aus einer Pigmentpräparation gemäß einem oder mehreren der Ansprüche 1 bis 8 und einem üblichen Offsetdruckfarbenfirnis.

## Claims

1. A pigment preparation comprising an organic pigment and a phenol-modified natural resin derivative having a weight-average molecular weight (M_{w}) of from 400 to 10,000 g/mol which is obtainable by reacting a mixture of reactants containing
a) from 50 to 95% by weight of natural resin or natural resin acids,
b) from 0.5 to 30% by weight of monocyclic or polycyclic phenols,
c) from 0.01 to 15% by weight of aldehydes or aldehyde acetals,
d) from 0.001 to 2% by weight of metal compounds from groups Ia and IIa of the Periodic Table, and
e) from 4.489 to 30% by weight of α,β-ethylenically unsaturated carboxylic acids or their anhydrides
and has an acid number in the range from 160 to 300 mg of KOH per g of resin.

2. The pigment preparation as claimed in claim 1, wherein the phenol-modified natural resin derivative has an acid number of between 200 and 260 mg of KOH per g of resin.

3. The pigment preparation as claimed in claim 1 or 2, wherein the average molar mass M_{w} of the phenol-modified natural resin derivative is from 1000 to 8000 g/mol.

4. The pigment preparation as claimed in at least one of claims 1 to 3, wherein component a) comprises rosin, tall resin, root resin or partially hydrogenated, disproportionated or dimerized natural resins.

5. The pigment preparation as claimed in at least one of claims 1 to 4, wherein component b) is phenol, cresol, butylphenol, amylphenol, nonylphenol, octylphenol, phenylphenol or bisphenol A.

6. The pigment preparation as claimed in at least one of claims 1 to 5, wherein component e) is methacrylic acid, acrylic acid, fumaric acid, maleic acid, maleic anhydride, itaconic acid, cinnamic acid or a mixture thereof.

7. The pigment preparation as claimed in at least one of claims 1 to 6, wherein the organic pigment is C.I. Pigment Yellow 12, 13, 14, 17, 55, 74, 83, 126, 127, 174, 176, 188, C.I. Pigment Orange 16, 34, C.I. Pigment Red 57:1 and 63:1 or a mixture of these pigments.

8. The pigment preparation as claimed in at least one of claims 1 to 7, containing from 50 to 90, preferably from 65 to 75% by weight of organic pigment, from 10 to 50, preferably from 25 to 35% by weight of phenol-modified natural resin derivative, and from 0 to 5% by weight of customary additives and auxiliaries.

9. A process for preparing a pigment preparation as claimed in one or more of claims 1 to 8, which comprises adding the phenol-modified natural resin derivative during the preparation of the organic pigment or to the finely divided powder, to a presscake or to an aqueous or organic suspension of the organic pigment.

10. The use of a pigment preparation as claimed in one or more of claims 1 to 8 as an offset printing ink.

11. An offset printing ink consisting essentially of a pigment preparation as claimed in one or more of claims 1 to 8 and a conventional offset printing ink varnish.

## Revendications

1. Préparation de pigment contenant un pigment organique et un dérivé de résine naturelle modifié par des phénols, ayant une masse molaire moyenne en poids (M_{w}) de 400 à 10 000 g/mol, qui peut être obtenu par réaction d'un mélange de réactifs contenant
a) 50 à 95 % en masse d'une résine naturelle ou d'acides résiniques naturels
b) 0,5 à 30 % en masse de phénols monocycliques ou polycycliques
c) 0,01 à 15 % en masse d'aldéhydes ou d'acétals d'aldéhydes
d) 0,001 à 2 % en masse de composés de métaux des groupes Ia et IIa du système périodique et
e) 4,489 à 30 % en masse d'acides carboxyliques à insaturation α,β-éthylénique ou de leurs anhydrides,
et qui a un indice d'acide compris entre 160 et 300 mg de KOH par g de résine.

2. Préparation de pigment selon la revendication 1, **caractérisée en ce que** le dérivé de résine naturelle modifié par des phénols a un indice d'acide compris entre 200 et 260 mg de KOH par g de résine.

3. Préparation de pigment selon la revendication 1 ou 2, **caractérisée en ce que** la masse molaire moyenne M_{w} du dérivé de résine naturelle modifié par des phénols est de 1 000 à 8 000 g/mol.

4. Préparation de pigment selon l'une au moins des revendications 1 à 3, **caractérisée en ce que** le constituant a) est de la colophane, de la résine d'huile de pin, de la résine d'extraction ou des résines naturelles partiellement hydrogénées, dismutées ou dimérisées.

5. Préparation de pigment selon l'une au moins des revendications 1 à 4, **caractérisée en ce que** le constituant b) est le phénol, un crésol, un butylphénol, un amylphénol, un nonylphénol, un octylphénol, un phénylphénol ou le bisphénol A.

6. Préparation de pigment selon l'une au moins des revendications 1 à 5, **caractérisée en ce que** le constituant e) est l'acide méthacrylique, l'acide acrylique, l'acide fumarique, l'acide maléique, l'anhydride maléique, l'acide itaconique, l'acide cinnamique ou un de leurs mélanges.

7. Préparation de pigment selon l'une au moins des revendications 1 à 6, **caractérisée en ce que** le pigment organique est le pigment jaune C.I. PY 12, 13, 14, 17, 55, 74, 83, 126, 127, 174, 176, 188, le pigment orangé C.I. PO 16, 34, le pigment rouge C.I. PR 57:1 et 63:1, ou un mélange de ces pigments.

8. Préparation de pigment selon l'une au moins des revendications 1 à 7, contenant 50 à 90, de préférence 65 à 75 % en masse de pigment organique, 10 à 50, de préférence 25 à 35 % en masse de dérivé de résine naturelle modifié par des phénols et 0 à 5 % en masse d'additifs et d'agents auxiliaires classiques.

9. Procédé de préparation d'une préparation de pigment selon l'une ou plusieurs des revendications 1 à 8, **caractérisé en ce que** l'on ajoute le dérivé de résine naturelle modifié par des phénols pendant la préparation du pigment organique, ou à la poudre finement divisée, à un gâteau de filtre-presse ou à une suspension aqueuse ou organique du pigment organique.

10. Utilisation d'une préparation de pigment selon l'une ou plusieurs des revendications 1 à 8 comme encre pour l'impression offset.

11. Encre pour l'impression offset, constituée essentiellement d'une préparation de pigment selon l'une ou plusieurs des revendications 1 à 8 et d'un vernis pour encre d'impression offset classique.
